# EUROPEAN PATENT SPECIFICATION

(11) **EP 4 458 222 B1**
(45) Date of publication and mention of the grant of the patent: **02.12.2026**
(21) Application number: 24150930.6
(22) Date of filing: 09.01.2024
(51) Int. Cl.: A47G 19/22, A47J 43/27, B65D 1/26

(54) **CONTAINER FOR MIXING LIQUIDS**
BEHÄLTER ZUM MISCHEN VON FLÜSSIGKEITEN
RÉCIPIENT POUR MÉLANGER DES LIQUIDES

(30) Priority: 02.05.2023 US 202318142344
(43) Date of publication of application: 06.11.2024
(73) Proprietor: Boos, Jonathan, Sarasota, FL 34233 (US)
(72) Inventor: Boos, Jonathan, Sarasota, FL 34233 (US)
(74) Representative: Isarpatent

(56) References cited:
- EP-B1- 1 210 890
- CN-A- 104 083 052
- CN-U- 205 359 081
- US-A- 3 495 736
- US-A1- 2013 181 004
- US-A1- 2014 192 610
- US-A1- 2022 110 486
- US-B2- 11 613 420

## Description

### SUMMARY

A container for mixing according to the invention is defined by the features of claim 1 and the use of the container according to the invention is defined by the features of claim 7.

A container for mixing comprising a container body having a first end comprising an opening and a second end opposite the first end, the second end having a closed, rounded shape is known from the document CN 104083052 A. In that mixing container the container body comprises a container wall extending between the opening and the second end, the container wall having an interior surface comprising a single substantially continuous rounded interior wall face with a plurality of indentations therein arranged in a helical configuration around the interior wall face and between the opening and the second opposite end. The container wall is a single wall and has an exterior surface with a plurality of protrusions matching the plurality of indentations on the interior surface. That mixing container has sharp edges and corners that pose sanitary problems by making it more difficult to clean.

This summary is not intended to describe each disclosed embodiment or every implementation of mixing containers as described herein. Many other novel advantages, features, and relationships will become apparent as this description proceeds. The figures and the description that follow more particularly exemplify illustrative embodiments.

### BRIEF DESCRIPTION OF THE DRAWINGS

FIG. 1 is a front isometric view of a container according to an embodiment of the present disclosure;
FIG. 2 is a cutaway view of the container of FIG. 1;
FIG. 3 is a front and rear elevation view of the container of FIG. 1;
FIG. 4 is a left and right elevation view of the container of FIG. 1;
FIG. 5 is a top elevation view of the container of FIG. 1;
FIG. 6 is a bottom elevation view of the container of FIG. 1; and
FIG. 7 is a section view of a double wall container according to an embodiment of the present disclosure.

### DETAILED DESCRIPTION OF ILLUSTRATIVE EMBODIMENTS

In general, embodiments of the present disclosure provide a container for mixing liquids or a combination of liquids and other materials such as ice, powders or granules, or the like, therein. The liquids are mixed by a combination of movement of the container by a user and the design of the interior of the container, specifically a twisted or helical configuration that encourages a whirling motion when liquid in the container is shaken. In one embodiment, an interior of the container is provided with rounded helical indentations and/or protrusions that are easy to clean and encourage mixing when liquid in the container is shaken. A rounded "bullet" bottom has no sharp edges for catching, clumping, or creating pockets of unmixed liquids, powders, ice, etc.

Hexagonal and other sharp interior edged containers for mixing liquids create numerous problems with cleanup of such containers. Sharp edges and corners are hard to clean, with nooks and crannies that easily harbor unmixed powders and the like, and are very difficult to clean and to keep clean. In contrast, the smooth edges and rounded bottom of embodiments of the present disclosure remove those crags from the container, allowing for the smooth surfaces not to retain any unmixed or mixed ingredients/liquids. The embodiments of the present disclosure thus provide a more sanitary and easily cleanable mixing vessel.

It should be noted that the same reference numerals are used in different figures for same or similar elements. It should also be understood that the terminology used herein is for the purpose of describing embodiments, and the terminology is not intended to be limiting. Unless indicated otherwise, ordinal numbers (e.g., first, second, third, etc.) are used to distinguish or identify different elements or steps in a group of elements or steps, and do not supply a serial or numerical limitation on the elements or steps of the embodiments thereof. For example, "first," "second," and "third" elements or steps need not necessarily appear in that order, and the embodiments thereof need not necessarily be limited to three elements or steps. It should also be understood that, unless indicated otherwise, any labels such as "left," "right," "front," "back," "top," "bottom," "forward," "reverse," "clockwise," "counter clockwise," "up," "down," or other similar terms such as "upper," "lower," "aft," "fore," "vertical," "horizontal," "proximal," "distal," "intermediate" and the like are used for convenience and are not intended to imply, for example, any particular fixed location, orientation, or direction. Instead, such labels are used to reflect, for example, relative location, orientation, or directions. It should also be understood that the singular forms of "a," "an," and "the" include plural references unless the context clearly dictates otherwise.

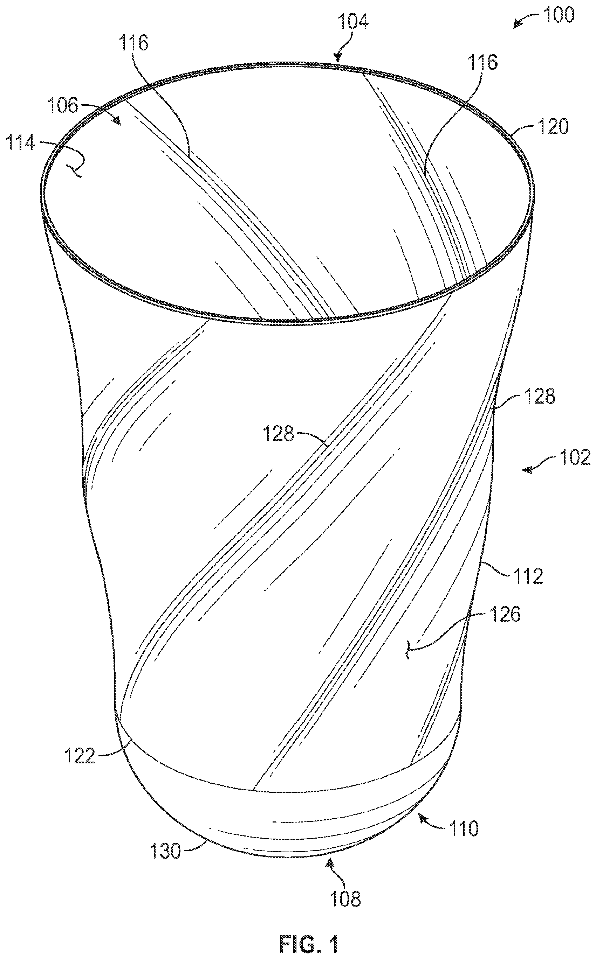

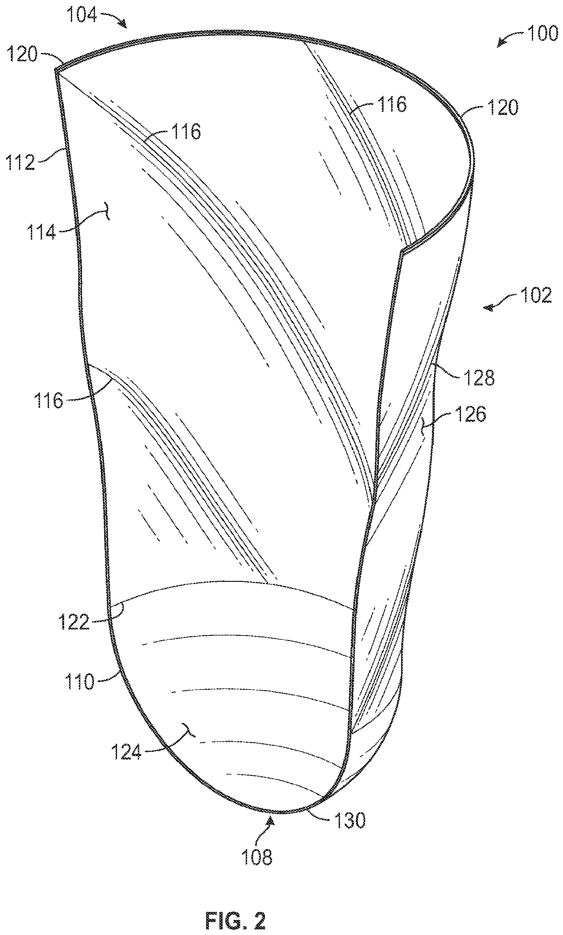

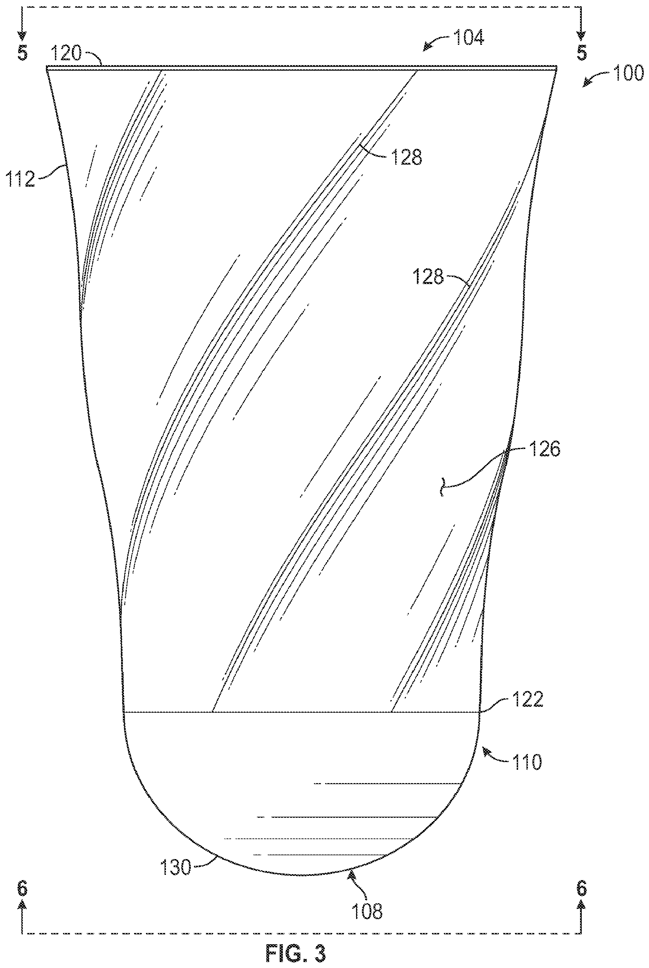

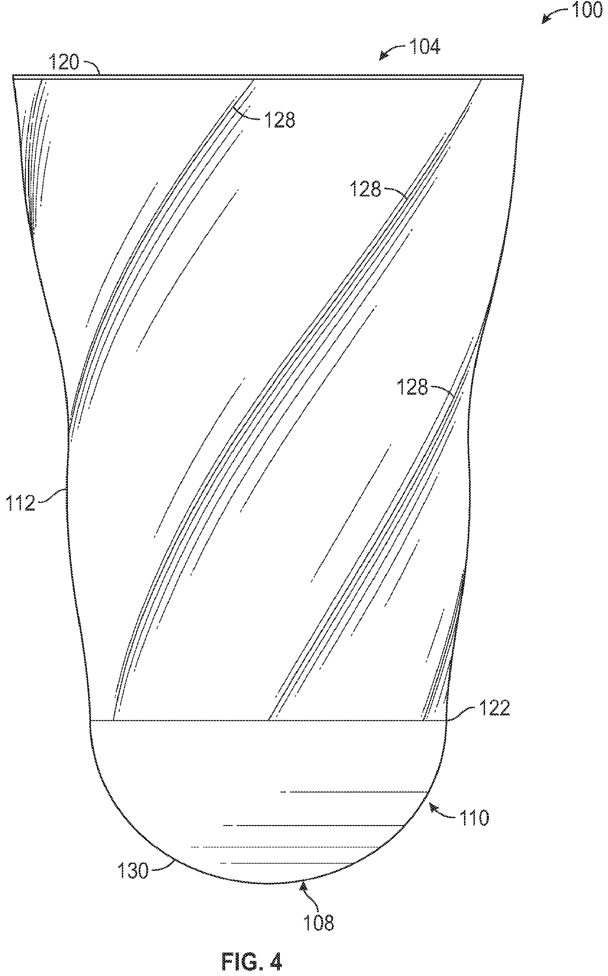

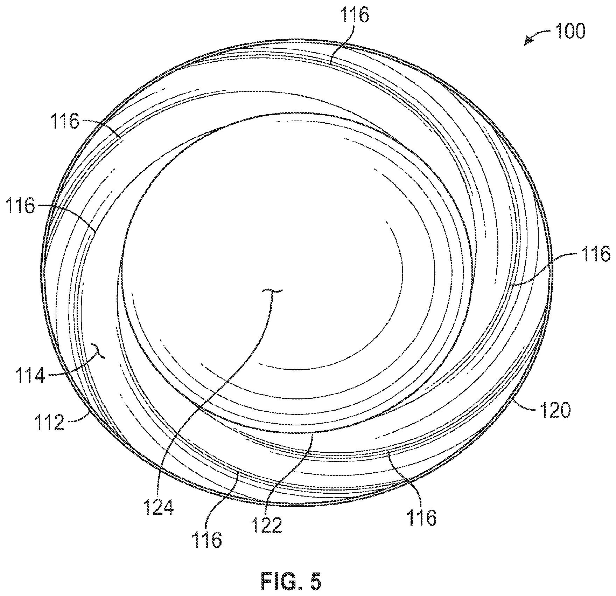

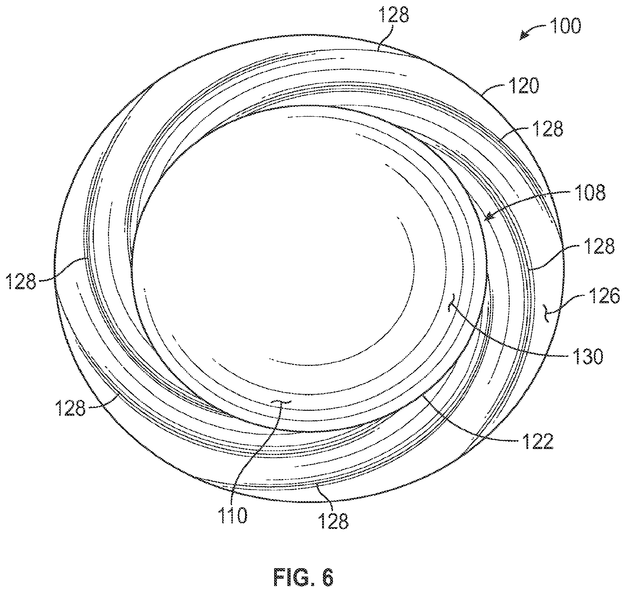

A mixing container 100 according to an embodiment of the present disclosure is shown in FIG. 1. FIGS. 2-6 show the container 100, respectively, in cutaway view in FIG. 2, front (and identical rear) view in FIG. 3, left (and identical right) view in FIG. 4, top view in FIG. 5, and bottom view in FIG. 6.

Container 100 comprises in one embodiment a container body 102 having a first end 104 comprising an opening 106 and a second end 108 opposite the first end 104, the second end 108 having a closed rounded shape 110. The container body 102 further includes a container wall 112 between the opening 106 and the second end closed rounded shape 110. The container wall 112 has an interior surface 114 comprising a single substantially continuous rounded wall face with a plurality of smooth indentations 116 therein arranged in a helical configuration around the wall 112 interior surface 114 between the opening 104 and the second opposite end rounded shape 110.

In one embodiment, the plurality of smooth indentations 116 are equally spaced about the rounded wall face. The number of smooth indentations 116 is in one embodiment at least two, and in another embodiments is six. While six smooth indentations 116 are shown in the figures, it should be understood that at least two smooth indentations 116, or a different number larger than two, are within the scope of the disclosure.

The smooth indentations 116 in one embodiment start at or near a top 120 of the wall 112 and extend around a helical or spiral path toward a bottom 122 of the wall 112. In one embodiment, each smooth indentation 116 subtends an angle of about 120 degrees, but it should be understood that a different subtended angle may be used without departing from the scope of the disclosure. Different subtended angles may be used for more efficient or agitating mixing in various embodiments.

In the various configurations, each of the plurality of smooth indentations 116 comprises a depression with rounded edges, with the interior surface 114 and the indentations 116 providing a substantially continuous smooth surface without sharp edges or corners. Each of the plurality of smooth protrusions 128 may also provide a protrusion with rounded edges, with the exterior surface 126 and the smooth protrusions 128 providing a substantially continuous smooth exterior surface without sharp edges or corners.

The second end 108 is shaped like a semispherical dome with a smooth interior surface 124 having no sharp edges or corners, as well as a smooth exterior surface 130 also having no sharp edges or corners. In one embodiment, the container 100 has a larger diameter at the first end 104 that at the second end 108. In another embodiment, the container 100 has a same diameter at the first end 104 and the second end 108.

The container wall 112 is a single wall having the interior surface 114 with smooth indentations 116, and an exterior surface 126 with smooth protrusions 128 that correspond with the smooth indentations 116. In another embodiment, the smooth protrusions 128 may be different than the smooth indentations. Further, while indentations and protrusions are discussed as interior and exterior features, it should be understood that the indentations and protrusions may be exterior and interior features without departing from the scope of the disclosure.

Still further, in another embodiment, the container wall 112 a double wall configuration having an exterior surface 126 separated from the interior surface 114, for example by a gap. The gap may be insulated, or simply an air gap in various embodiments. In such a configuration, the exterior surface 126 may still comprise a plurality of smooth protrusions 128 matching the plurality of smooth indentations 116 on the interior surface 114. The exterior surface 126 in such a configuration may also comprise a plurality of smooth protrusions 128 different from the plurality of smooth indentations 116 on the interior surface 114. Still further, in such a configuration, the exterior surface 126 may comprise a smooth surface with no protrusions.

In a double wall configuration, the exterior surface 130 may differ from the interior surface 124 of the rounded portion 110. In one embodiment, the exterior surface may be flat on a bottom thereof so as to provide a way for the container to stand upright on its own.

Various lids or caps may be used with the container 100, such as but not limited to snap on lids, screw on lids, friction fit lids, or the like. A lid is used when contents of the container are to be mixed, such as by shaking. For use with a lid, a brim or other lid retaining feature may be included with the container or insert without departing from the scope of the disclosure. Such lid retaining feature may be a part of the top of the container/insert, or may be an extension thereof. Lid retaining features include, by way of example only and not by way of limitation, internal or external threads, lids with gaskets that form a friction fit, such as a silicone gasket, lids that snap on to the top of the container/insert, or the like.

Embodiments of the present disclosure have been described that provide a container for mixing some combination of liquids, ice, powders, granules, or the like. The embodiments provide a helical set of smooth indentations (or protrusions) and a rounded bottom interior, the interior of the container having no sharp edges or corners, rendering it easy to clean. The smooth indentations (or protrusions) help in mixing the contents of the container when it is shaken, with the indentations (or protrusions) causing the contents to agitate and mix more thoroughly than with a straight edged container wall.

The container embodiments described herein may be made of any suitable material, including but not limited to different plastics, stainless steel, aluminum, and the like. In some embodiments, with the rounded exterior bottom portion 110, the containers of the present disclosure may be used as inserts into another vessel so as to insulate an entire combination, or to allow for a container of the type discussed herein to be used in combination with a vessel of a different design. This is possible so long as the container of the present disclosure may be physically placed within the vessel. Alternatively, the container 100 may be a stand-alone container with single or double wall construction, that may stand on its own, or have exterior rounded portions so that it is used in conjunction with a stand or other holder, including a secondary vessel or the like. Such a vessel may have any configuration or shape, design, or the like as long as it is suitably sized to accept the insert/container. Further, even a container not configured as an insert may be used inside another vessel as long as the size of that vessel is suitable to accept the container therein.

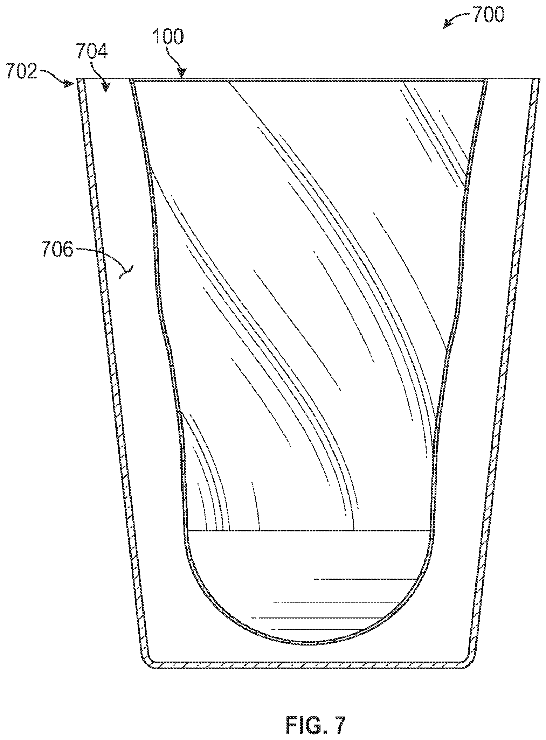

FIG. 7 shows an embodiment 700 in which a container/insert 100 is retained or inserted within a vessel 702. The insert/container 100 fits within an interior space 704 of the vessel 702. A gap 706 is present in one embodiment between an exterior surface 126 of the container 100 and an interior surface 708 of the vessel 700. In one embodiment, for a double wall construction as discussed above, the gap 706 is part of a sealed vessel 700 in which a vacuum seal is formed by sealing the insert/container 100 into the vessel 702. In other embodiments, an insulation layer is used to fill the gap 706. In other embodiments, the insert/container 100 is removably inserted into the vessel 702 and insulation is provided by air in the gap 706. In such configurations, it should be understood that any exterior shape of configuration of the vessel 702 may be used without departing from the scope of the disclosure.

In some embodiments, the interior configuration of the containers of the present disclosure include a smooth space curve with tangent lines at a constant angle with an opening on one end and an enclosed dome on the opposite other end as described herein. When capped with a lid, mix ability of ingredients is enhanced without the need of a separate agitator such as a whisk ball, spatula, spoon, sharp edge, or the like. Directional mixing motion is built within the container's continuous curved surfaces. No sharp edges are present, resulting in a container for which cleaning is straightforward and effective.

Due to the exterior protrusions 128, the container embodiments 100 have ergonomic advantages for gripping and holding the containers 100.

The above-disclosed subject matter is to be considered illustrative, and not restrictive, and the appended claims are intended to cover all such modifications, enhancements, and other embodiments, which fall within the scope of the present disclosure.

## Claims

1. A container (100) for mixing, comprising:
a container body (102) having a first end (104) comprising an opening (106) and a second end (108) opposite the first end (104), the second end (106) having a closed, rounded shape (110), the container body (102) further comprising a container wall (112) extending between the opening (106) and the second end (108), the container wall (112) having an interior surface (114) comprising a single substantially continuous rounded interior wall face with a plurality of smooth indentations (116) therein arranged in a helical configuration around the interior wall face and extending between the opening (104) and the second opposite end (106), wherein the container wall (112) is a single wall and has an exterior surface (126) with a plurality of smooth protrusions (128) matching the plurality of smooth indentations (116) on the interior surface (114), wherein each of the plurality of smooth indentations (116) comprises a depression with rounded edges providing a substantially continuous smooth surface without sharp edges, and wherein the second end (108) is shaped like a semispherical dome with a smooth interior surface (124) having no sharp edges or corners.

2. The container (100) of claim 1, wherein the plurality of smooth indentations (116) are equally spaced about the rounded interior wall face.

3. The container (100) according to any of the preceding claims, wherein the plurality of smooth indentations (116) comprises six indentations (116).

4. The container (100) according to any of the preceding claims, wherein each of the plurality of smooth indentations (116) subtends an angle of approximately 120 degrees between the first end (104) and the second end (108).

5. The container (100) according to any of the preceding claims, wherein the container has a larger diameter at the first end (104) than a diameter at the second end (108).

6. The container (100) according to any of the preceding claims, wherein the container (100) has a same diameter at the first end (104) and at the second end (108).

7. Use of the container according to any of the preceding claims as an insert (100) into another vessel (702).

8. Use of the container of claim 7, wherein a gap (706) is present between an exterior surface (126) of the insert (100) and an interior surface (708) of the vessel (702).

9. Use of the container of claim 7 or 8, wherein the gap (706) is part of a sealed vessel (700) in which a vacuum seal is formed by sealing the insert (100) into the vessel (702) or wherein an insulation layer is used to the fill the gap (706).

10. Use of the container according to any of the claims 7 to 9, wherein the insert (100) is removable inserted into the vessel (702) and insulation is provided by air in the gap (7060).

## Patentansprüche

1. Behältnis (100) zum Mischen, umfassend:
einen Behältniskörper (102), der ein erstes Ende (104), das eine Öffnung (106) umfasst, und ein zweites Ende (108) gegenüber dem ersten Ende (104) aufweist, wobei das zweite Ende (106) eine geschlossene, abgerundete Form (110) aufweist, wobei der Behältniskörper (102) ferner eine Behältniswand (112) umfasst, die sich zwischen der Öffnung (106) und dem zweiten Ende (108) erstreckt, wobei die Behältniswand (112) eine Innenfläche (114) aufweist, die eine einzige, im Wesentlichen durchgehende, abgerundete Innenwandfläche mit mehreren glatten Vertiefungen (116) darin umfasst, die in einer spiralförmigen Konfiguration um die Innenwandfläche angeordnet sind und sich zwischen der Öffnung (104) und dem zweiten, gegenüberliegenden Ende (106) erstrecken, wobei die Behältniswand (112) eine einzige Wand ist und eine Außenfläche (126) mit mehreren glatten Vorsprüngen (128) aufweist, die zu den mehreren glatten Vertiefungen (116) auf der Innenfläche (114) passen, wobei jede der mehreren glatten Vertiefungen (116) eine Aussparung mit abgerundeten Kanten umfasst, die eine im Wesentlichen durchgehende, glatte Fläche ohne scharfe Kanten bereitstellt, und wobei das zweite Ende (108) wie eine halbkugelförmige Kuppel geformt ist, mit einer glatten Innenfläche (124), die keine scharfen Kanten oder Ecken aufweist.

2. Behältnis (100) nach Anspruch 1, wobei die mehreren glatten Vertiefungen (116) gleichmäßig über die abgerundete Innenwandfläche beabstandet sind.

3. Behältnis (100) nach einem der vorhergehenden Ansprüche, wobei die mehreren glatten Vertiefungen (116) sechs Vertiefungen (116) umfassen.

4. Behältnis (100) nach einem der vorhergehenden Ansprüche, wobei jede der mehreren glatten Vertiefungen (116) einen Winkel von etwa 120 Grad zwischen dem ersten Ende (104) und dem zweiten Ende (108) einnimmt.

5. Behältnis (100) nach einem der vorhergehenden Ansprüche, wobei das Behältnis einen größeren Durchmesser an dem ersten Ende (104) als an dem zweiten Ende (108) aufweist.

6. Behältnis (100) nach einem der vorhergehenden Ansprüche, wobei das Behältnis (100) einen gleichen Durchmesser an dem ersten Ende (104) und an dem zweiten Ende (108) aufweist.

7. Verwendung eines Behältnisses nach einem der vorhergehenden Ansprüche als Einsatzelement (100) in einem anderen Behälter.

8. Verwendung eines Behältnisses nach Anspruch 7, wobei ein Spalt (706) zwischen einer Außenfläche (126) des Einsatzelements (100) und einer Innenfläche (708) des Behälters (702) vorhanden ist.

9. Verwendung eines Behältnisses nach Anspruch 7 oder 8, wobei der Spalt (206) Teil eines versiegelten Behälters (700) ist, wobei eine Vakuumabdichtung gebildet wird, indem das Einsatzelement (100) in dem Behälter (702) versiegelt wird oder wobei eine Isolierschicht verwendet wird, um den Spalt zu füllen.

10. Verwendung eines Behältnisses nach Anspruch 7 bis 9, wobei ein entfernbares Einsatzelement (100) in den Behälter (702) eingesetzt wird und die Isolierung durch in dem Spalt (7060) vorhandene Luft bereitgestellt wird.

## Revendications

1. Contenant (100) pour mélange, comprenant :
un corps de contenant (102) possédant une première extrémité (104) comprenant une ouverture (106) et une seconde extrémité (108) opposée à la première extrémité (104), la seconde extrémité (106) ayant une forme arrondie fermée (110), le corps de contenant (102) comprenant en outre une paroi de contenant (112) s'étendant entre l'ouverture (106) et la seconde extrémité (108), la paroi de contenant (112) possédant une surface intérieure (114) comprenant une face de paroi unique intérieure arrondie sensiblement continue avec une pluralité d'indentations lisses (116) dans celle-ci agencées dans une configuration hélicoïdale autour de la face de paroi intérieure et s'étendant entre l'ouverture (104) et la seconde extrémité opposée (106), dans lequel la paroi de contenant (112) est une paroi unique et possède une surface extérieure (126) avec une pluralité de saillies lisses (128) correspondant à la pluralité d'indentations lisses (116) sur la surface intérieure (114), dans lequel chacune de la pluralité d'indentations lisses (116) comprend une dépression avec des bords arrondis fournissant une surface lisse sensiblement continue sans arêtes vives, et dans lequel la seconde extrémité (108) a la forme d'un dôme semi-sphérique avec une surface intérieure lisse (124) n'ayant ni arêtes ni angles vifs.

2. Contenant (100) selon la revendication 1, dans lequel la pluralité d'indentations lisses (116) est espacée de manière régulière autour la surface de paroi intérieure arrondie.

3. Contenant (100) selon l'une quelconque des revendications précédentes, dans lequel la pluralité d'indentations lisses (116) comprend six indentations (116).

4. Contenant (100) selon l'une quelconque des revendications précédentes, dans lequel chacune de la pluralité d'indentations lisses (116) sous-tend un angle d'environ 120 degrés entre la première extrémité (104) et la seconde extrémité (108).

5. Contenant (100) selon l'une quelconque des revendications précédentes, dans lequel le contenant a un diamètre plus grand au niveau de la première extrémité (104) qu'un diamètre au niveau de la seconde extrémité (108).

6. Contenant (100) selon l'une quelconque des revendications précédentes, **caractérisé en ce que** le contenant (100) présente un diamètre identique à la première extrémité (104) et à la seconde extrémité (108).

7. Utilisation du contenant selon l'une quelconque des revendications précédentes en tant qu'élément inséré (100) dans un autre récipient (702).

8. Utilisation du contenant selon la revendication 7, dans laquelle un espace (706) est présent entre une surface extérieure (126) de l'élément inséré (100) et une surface intérieure (708) du récipient (702).

9. Utilisation du contenant selon la revendication 7 ou 8, dans laquelle l'espace (706) fait partie d'un récipient scellé (700) dans lequel un joint hermétique est formé en scellant l'élément inséré (100) dans le récipient (702) ou dans lequel une couche isolante est utilisée pour combler l'espace (706).

10. Utilisation du contenant selon l'une quelconque des revendications 7 à 9, dans laquelle l'élément inséré (100) est inséré de manière amovible dans le récipient (702) et l'isolation est assurée par l'air présent dans l'espace (7060).
